# EUROPEAN PATENT APPLICATION

(11) **EP 0 526 788 A2**
(43) Date of publication of application: **10.02.1993**
(21) Application number: 92112267.7
(22) Date of filing: 17.07.1992
(51) Int. Cl.: H04M 3/50, H04M 11/08

(54) **Device for the provision of information by telephone**

(30) Priority: 31.07.1991 JP 216105/91
(71) Applicant: RICOS CO., LTD., Miyakojima-ku, Osaka (JP)
(72) Inventor: Tsumura, Mihoji, Miyakojima-ku, Osaka (JP)
(74) Representative: Hering, Hartmut, Dipl.-Ing.

(57) **Abstract**

The invention is a device for the provision of various types of information through the medium of a public telephone line. By using a comparatively large capacity semiconductor memory (3) with a fast access time as the memory medium, the invention is able to handle simultaneous calls on more than one telephone line under equivalent conditions. The invention comprises a ROM (3) in which digital data is stored, and a timing signal output means (8), which divides the basic clock time and outputs the resultant timing signals at the required frequency. The invention is also fitted with a plurality of parallel control means (2a-2c), each of which carries out an address count in accordance with the timing signals while at the same time reading out the data corresponding to each successive address from the ROM (3). The invention is also able to read data out in parallel from more than one address in the ROM (3) by allocating and transmitting the timing signals output by said timing output means (8) at equal intervals to each of the control means (2a-2c), said data being subsequently output as appropriate to each of the public telephone lines to which the device according to the invention is connected.

## Description

### BACKGROUND OF THE INVENTION

### 1. FIELD OF THE INVENTION

The invention relates to a technique which enables the use of a semiconductor memory, rather than the conventional magnetic tape, as a data storage medium for the provision of, for example, a music or computer game program related telephone information service, and in this way facilitates a response on more than one telephone line at the same time under equivalent conditions.

### 2. DESCRIPTION OF THE PRIOR ART

Telephone information services are currently extremely popular and provide a wide variety of information on anything from the weather through to stock related data. The most commonly used data storage medium in this sort of case is audio tape.

Modern technology makes it an extremely simple matter to record speech or other audio data onto an audio tape for use in this type of service. However, the recording and reproduction of sound using an audio tape also necessitates the use of a large number of moving mechanical parts such as motors, magnetic heads, capstans and flywheels and this in turn raises problems such as the wear and tear of components and accumulation of dirt on the magnetic heads. Systems such as this are unlikely, therefore, to work for long periods without some sort of maintenance. Moreover, in cases such as weather reports, where the same piece of information is presented repeatedly over a fixed period of time, it makes sense to use an endless tape, whereas, in the case of information services involving, for example, music or computer game programs, on the other hand, where the user is able to select appropriate options from a wide variety of different types of data, the use of an endless tape would result in large variations in access time, thereby making such a system virtually unusable. The problem could be solved with the help of a one-way magnetic tape and frequent use of the rewind and fast forward functions but, even then, the response time between the selection of an option and the provision of the required information will be unacceptably long. It is, moreover, difficult to cater for the provision of the same information on more than one telephone line under equivalent conditions using only a single reproduction unit. In other words, if users are to be provided with standardized information then there is a limit to the problems involved but in cases where, for example, several users each require a different item of information at the same time or else, even where the information required is the same, the timing of the calls does not match, it is impossible to satisfy all the callers' requirements without delay using only one machine. This means that more than one reproduction device must be used and this raises not only the problem of loss of efficiency but also the simple physical problem of where to house the numbers of units required.

A recent advance in the electronic equipment field revolves around the development of a technique for the storage of digital music or computer game related program data, for example, on IC modules, thereby enabling it to be loaded as and when required. However, the unit memory capacity of these modules is severely limited which means that only very simple messages can be stored in this way. This in turn precludes the use of this sort of storage medium for the storage of voluminous music or computer game program data. Since it is also difficult to use this sort of medium for the storage of data, such as news items, which require regular updating, the range of services that can be handled by such a system are fairly limited.

### SUMMARY OF THE INVENTION

It is the primary object of this invention to provide a means of dispensing with the use of magnetic tape as a storage medium by arranging for the storage of comparatively large amounts of data in a semiconductor memory while at the same time reducing the necessary access time.

It is a further object of this invention to provide an information provision device which can respond under equivalent conditions to calls for information on more than one telephone line at the same time.

To this end, we have provided the present invention with a ROM for the digitalization and storage of audio waves, and with a means for the division of the basic clock time to enable the output of timing signals at the required frequency. We have also provided the invention with a plurality of control means, arranged in parallel and set by the receipt of an incoming call signal from a public telephone line, said control means also being programmed to carry out an address count in accordance with the aforementioned timing signals and to simultaneously read out the data corresponding to each new address from the corresponding address in the ROM. At the same time, we have also incorporated a technique to enable the timing signals output by the timing output means to be transmitted to each of said plurality of control means and for each of said control means to then read the data in parallel from each of the various different addresses in the ROM, said data subsequently being converted to analog signal form and output individually.

### BRIEF DESCRIPTION OF THE DRAWINGS

Figure 1 is a block diagram showing an example of the preferred embodiment of the invention which is designed to cater for three public telephone lines.
Figure 2 is a block diagram illustrating the relationship between a single control circuit, which functions as the control means, and the rotary counter, which outputs the timing signals.
Figure 3 is a timing chart illustrating the sequence of operations in a configuration of the type shown in Figure 2, the rotary counter in the chart being set to deal with three public telephone lines under equivalent conditions.
Figure 4 is a graph illustrating the relationship between the data stored in the ROM and the addresses, the vertical axis representing the quantized data and the horizontal axis representing the addresses (passage of time).

### DETAILED DESCRIPTION OF THE PREFERRED EMBODIMENTS

There follows a description of the preferred embodiments of the invention by reference to the accompanying drawings.

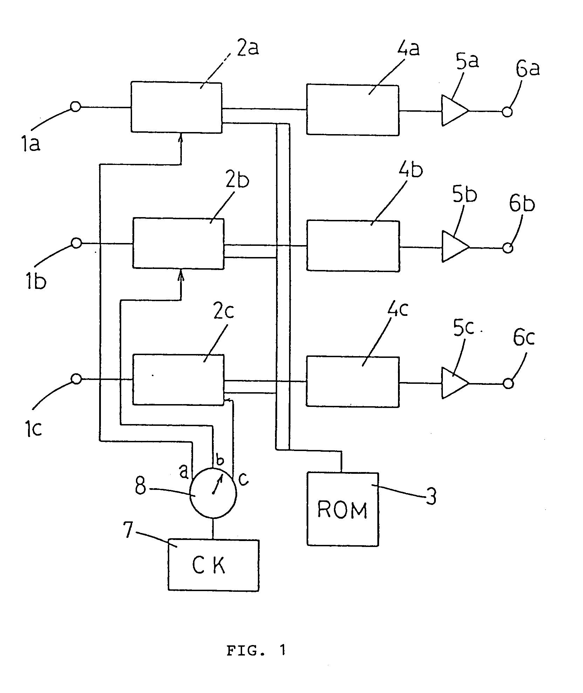

Figure 1 is a block diagram of the present invention designed in such a way as to enable it to accommodate three public telephone lines. 1 a - 1 c are input terminals each connected in parallel to the information provision device which is driven by the receipt of incoming call signals. 2a - 2c are control circuits each of which functions as a control means and accesses the ROM 3 whenever an incoming call signal is input to the input terminals 1 a - 1 c. Said control circuits 2a - 2c also output the speech, music or computer game program data read out of the ROM 3 to the D/A converters 4a - 4c from which it is subsequently output by way of the buffers 5a - 5c to the output terminals 6a - 6c, in each case for reconnection to the public telephone line on which the corresponding request was received. In this preferred embodiment, a plurality of control circuits 2a - 2c read data out of the ROM 3 under equivalent conditions. Timing control is achieved with the help of a rotary counter 8, which divides the basic timing output of the clock circuit 7 and generates signals a,b,c, which drive the control circuits 2a - 2c on the basis of an equal division of the total amount of available operating time between each circuit. For the purpose of this preferred embodiment, we have assumed that the public telephone lines are analog lines. This need not be the case, however, although, if the public telephone lines were digital lines, the D/A converters 4a - 4c would not be required and each item of output would instead be connected to the digital line on which the corresponding request was received by way of an output interface. It goes without saying, of course, that each of said control circuits 2a - 2c also contains its own microprocessor, which controls the timing signals and data I/O functions.

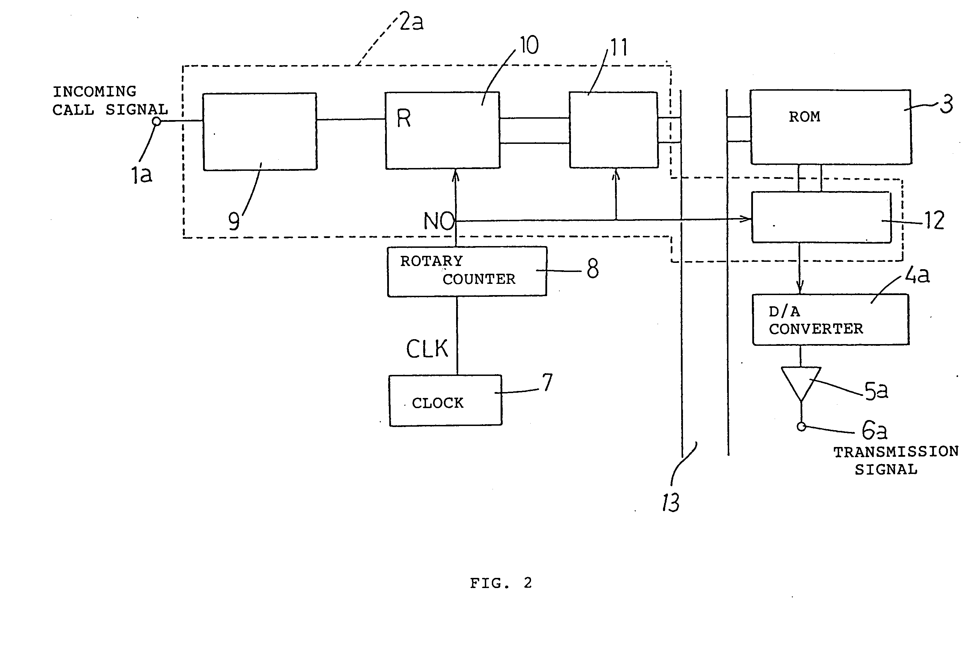

Figure 2 illustrates the relationship between the control circuit 2a and the rotary counter 8. In the drawing, 9 is a trigger circuit which holds its output high during periods when signals are not being received and switches to low on receipt of an incoming call signal or, in other words, when a telephone connection is in progress. 10 is an address counter which receives the output of the trigger circuit 9 by way of the address counter 10 reset terminal R. When an incoming call signal is input and the output of the trigger circuit 9 is switched to low, the address counter 10 reset is released and the counter starts to count from 0 in increments of 1 and the data reading operation starts. The count timing signals themselves are output from the rotary counter 8 and are divided into equal intervals and allocated in accordance with the number of control circuits to which the rotary counter 8 is connected. Thus, if there are three control circuits as in the preferred embodiment illustrated in Figure 1, for example, three timing signals a,b,c are output by the rotary counter 8 during each complete cycle. However, of these three timing signals a,b,c, only timing signal a is input as a timing signal to the control circuit 2a. Moreover, since the number of timing signals output from the rotary counter 8 during each complete cycle corresponds exactly with the total number of control circuits, it follows that each control circuit is allocated only one timing signal during each cycle.

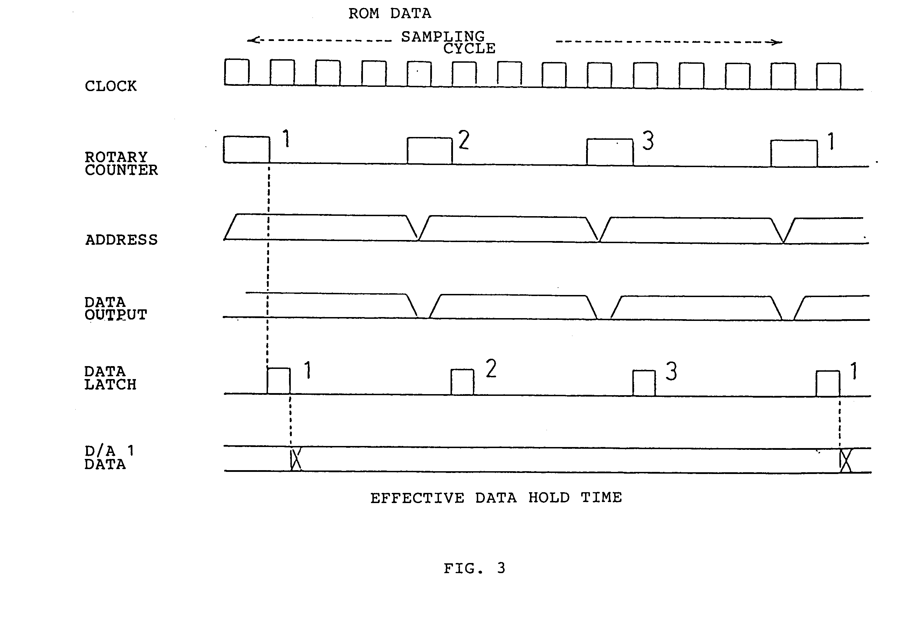

When a timing signal is output by the rotary counter 8 and input to the address counter 10, it is also simultaneously input to an address latch circuit 11 and a data latch circuit 12. The timing signals thus also control the timing of each of the address latch circuits. The rise of the timing signal output by the rotary counter 8 thus also serves to latch the count value of the address counter 10 in the address latch circuit 11 and to specify the readout address to the ROM by way of the address bus 13. The next timing signal output by the rotary counter 8 activates the data latch circuit 12 and holds the data output from the specified address in the ROM. Said data is then converted to analog signal form in the D/A converter 4a and transmitted by way of the buffer 5a to the output terminal 6a from which it is output to the line user's own terminal unit. The timing chart in Figure 3 illustrates this sequence of operations. The chart itself illustrates the way in which three public telephone lines can be dealt with under equivalent conditions with the help of the rotary counter 8.

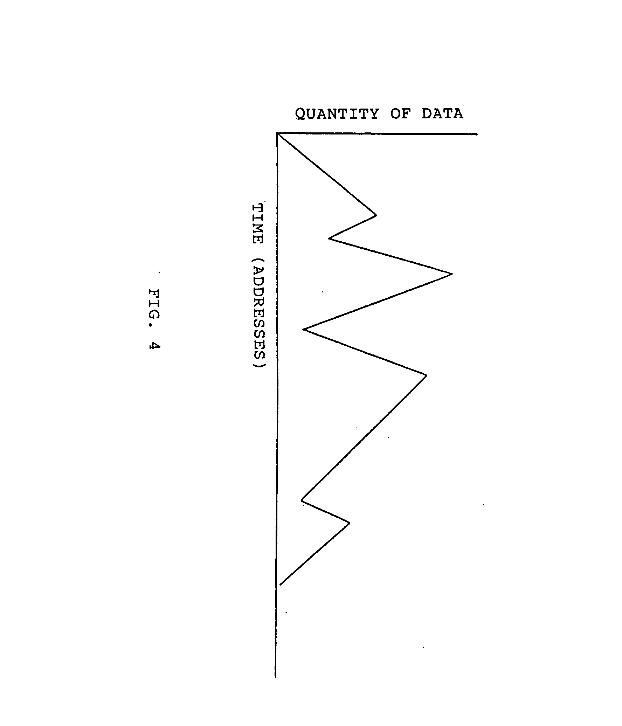

We will now look at Figure 4, which is a graph illustrating the relationship between the data stored in the ROM 3 and the addresses. The graph's vertical axis represents the quantized data and the horizontal axis represents the addresses (passage of time). The quantized data itself is represented as numbers of bits, the maximum number of bits allocated to each address in the present embodiment being eight. For the address settings, a sampling frequency of approximately 4 KHz has been used. The line graph lines represents the points plotted for aggregate quantity of data in each address, joined by straight lines.

With a configuration of the type outlined above, when a user accesses the system, the incoming signal is first input to the input terminal 1 a, the output of the trigger circuit 9 is then switched to low and the address counter 10 reset is released after which the counter itself assumes standby mode ready to start a count. The system remains in this state until its own timing signal is output from the rotary counter 8, at which point the address counter increments the address count by one and the address latch circuit 11 simultaneously reads the data corresponding to the address in the address counter from the corresponding address in the ROM 3. Said data is next latched by the data latch circuit 12 from which it is subsequently output to the D/A converter 4a, where the latched signals are converted to analog signals in readiness for output from the output terminal 6a.

In the meantime, the rotary counter 8 completes one full cycle and starts its next cycle. On receipt of its next timing signal, the address counter 10 again increments the address count by one and the sequence of operations outlined above is carried out again. This procedure is repeated until all the required data has been read out address by address and output in analog form. If, during the course of the above operation, the system is accessed by a second user, the second call signal will be connected with the input terminal 1 and the whole of the processing procedure described above will be carried out in exactly the same way but on parallel circuits. Moreover, since the timing of all these operations is controlled by means of the signals a,b,c divided and allocated by the rotary counter 8, there is no duplication or erroneous transmission of data.

Furthermore, it makes no difference whether the incoming calls on all three telephone lines arrive more or less simultaneously or whether they arrive at quite different times since the count operations of the address counters 10 start in each case from 0 and since the ROM 3 is a semiconductor memory with an extremely fast response time, which means that there is no mutual interference between the readout and output operations being carried out in connection with calls on different lines. This makes the system particularly efficient.

As will be clear from the technical explanation given above, the combination in the preferred embodiment of a single ROM and a single rotary counter enables a plurality of control circuits to be driven under equivalent conditions by means of the periodic output of timing signals from said rotary counter while at the same time also enabling the reading of the contents of the ROM addresses in order starting with the first address simply by incrementing the address count of each control circuit one by one. The use of this configuration means that the only hardware elements of the system that need to be augmented in line with the number of telephone lines connected to said system are the control circuits. This in turn enables the unit to be made more compact. Moreover, the fact that the timing of readouts from the ROM is controlled centrally from the common rotary counter also provides a measure of protection against the execution of duplicated or erroneous readout instructions while at the same time helping to protect the contents of the ROM itself.

A further feature of the invention is that, since the address count in respect of each control circuit is carried out in each case on the basis of the receipt of a different incoming call signal, all the requested information from beginning to end is transmitted to each of the plurality of telephone lines regardless of whether said requests are received more or less simultaneously on each line or of whether they are received at quite different times. In other words, the invention represents an extremely efficient means of providing a plurality of users with data under equivalent response conditions using the same device. Moreover, in the description of the preferred embodiment given above, we have alluded simply to the use of a single ROM. This should not be taken to mean a single semiconductor, however, but rather to refer to the concept of a single memory area. For this reason, any system which comprises more than one ROM may be taken to be technically equivalent to the present invention so long as said ROMs constitute a single memory area. Again, a non-erasable ROM can be used for the provision of information which is unlikely to require amendment, while a non-volatile erasable memory, such as an EEPROM or an EPROM, can equally be used in cases where it may prove necessary to amend the data from time to time. Either of the above structures would clearly fall within the scope of the present invention.

## Claims

1. An information provision device comprising a single ROM (3), in which data is stored in digital form, and a timing output means (8) that divides the basic clock time and outputs the resultant output timing signals at the required frequency, said information provision device being further provided with a plurality of parallel control means (2a-2c), each of said control means (2a-2c) being set by the receipt of an incoming call signal from a public telephone line and carrying out an incremental address count in response to said timing signals while at the same time reading out the data corresponding to each address from said ROM (3), said information provision device also reading data out in parallel from more than one address in said ROM (3) by allocating and transmitting the timing signals output by said timing output means (8) at equal intervals to each of said plurality of control means (2a-2c), and outputting said data as appropriate to each of the public telephone lines to which said information provision device is connected.

2. The information provision device according to claim 1 which uses a rotary counter (8) as the timing signal output means.

3. The information provision device according to claim 1 or claim 2 in which the public telephone lines are analog lines and in which required data that has been read from the ROM (3) is first converted to analog form by a D/A converter (4a-4c) and then output to said public telephone lines.

4. The information provision device according to anyone of claims 1 to 3 in which the public telephone lines are digital lines and in which required data that has been read from the ROM (3) is output to said public telephone lines by way of an interface.

5. The information provision device according to anyone of the preceding claims in which the ROM (3) is a non-erasable non-volatile memory.

6. The information provision device according to anyone of the preceding claims in which the ROM is an EPROM.

7. The information provision device according to anyone of claims 1 to 5 which the ROM is an EEPROM.

8. The information provision device according to anyone of the preceding claims in which each of the plurality of control means (2a-2c) contains its own microprocessor, said microprocessor being used to control the input and output operations.
